# EUROPÄISCHE PATENTSCHRIFT

(11) **EP 1 380 463 B1**
(45) Veröffentlichungstag und Bekanntmachung des Hinweises auf die Patenterteilung: **20.09.2006**
(21) Anmeldenummer: 03012357.4
(22) Anmeldetag: 30.05.2003
(51) Int. Cl.: B60K 17/348, B60K 17/35

(54) **Stufenloses Getriebe**
Continuously variable transmission
Transmission à variation continue

(30) Priorität: 12.07.2002 DE 10231514
(43) Veröffentlichungstag der Anmeldung: 14.01.2004
(73) Patentinhaber: AUDI AG, 85045 Ingolstadt (DE)
(72) Erfinder: Meixner, Christian, 85049 Ingolstadt-Dünzlau (DE); Schenker, Mario, 85049 Ingolstadt (DE); Märkl, Johann, 85128 Nassenfels (DE)

(56) Entgegenhaltungen:
- DE-A- 10 028 861
- DE-A- 19 515 515
- DE-A- 19 757 232
- DE-A- 19 902 637
- DE-C- 3 516 982
- DE-C- 19 538 661
- FR-A- 2 172 741
- FR-A- 2 585 300
- GB-A- 2 159 110
- US-A- 4 884 653
- PATENT ABSTRACTS OF JAPAN Bd. 015, Nr. 053 (M-1079), 7. Februar 1991 (1991-02-07) -& JP 02 286433 A (MAZDA MOTOR CORP), 26. November 1990 (1990-11-26)
- PATENT ABSTRACTS OF JAPAN Bd. 013, Nr. 204 (M-825), 15. Mai 1989 (1989-05-15) & JP 01 028025 A (NISSAN MOTOR CO LTD), 30. Januar 1989 (1989-01-30)

## Beschreibung

Die Erfindung betrifft ein stufenloses Getriebe für Kraftfahrzeuge mit Allradantrieb, gemäß den Oberbegriffen der unabhängigen Ansprüche 1 und 9. Ein solches Getriebe ist aus der JP-A-2 286 433 bekannt.

Bekannt sind stufenlose Getriebe, bei denen der Kraftfluss von der Antriebswelle ggf. unter Zwischenschaltung eines Vorgeleges (oder Planetenradsatzes) auf den Antriebsscheibensatz des Umschlingungswandlers und von dort über eine Kette oder ein Schubgliederband auf den Abtriebsscheibensatz und die Abtriebswelle verläuft. Die Abtriebswelle kann auf ein Längsdifferenzial wirken, dessen Abtriebselemente schließlich die Vorderachse und die Hinterachse des Kraftfahrzeuges antreiben. Durch Zwischenschaltung beispielsweise einer Viskokupplung oder einer Haldexkupplung kann der Antrieb der zweiten Achse auch nur bei auftretenden Drehzahldifferenzen zwischen der Vorderund der Hinterachse aktiviert werden. Des weiteren ist ein zweiter Umschlingungswandler vorgesehen, so dass der eine Umschlingungswandler auf die Vorderachse und der zweite Umschlingungswandler auf die Hinterachse des Kraftfahrzeuges wirkt. Die beiden Antriebsscheibensätze der beiden Umschlingungswandler sind auf einer Antriebswelle angeordnet.

Aufgabe der Erfindung ist es, ein Getriebe der gattungsgemäßen Art vorzuschlagen, mit dem sich höhere Antriebsmomente übertragen lassen und das hinsichtlich der steuerungstechnischen Möglichkeiten und der baulichen Anordnung besonders günstig ist.

Diese Aufgabe wird erfindungsgemäß mit den kennzeichnenden Merkmalen der Patentansprüche 1 und 9 gelöst. Vorteilhafte Weiterbildungen der Erfindung enthalten die anderen Patentansprüche.

Gemäß den Ansprüchen 1 und 9 sind die beiden mit je einer Abtriebswelle verbundenen Abtriebsscheibensätze versetzt zueinander positioniert. Durch die Verwendung zweier Umschlingungswandler ergibt sich der Vorteil, dass das benötigte Antriebsmoment für das Kraftfahrzeug auf die beiden Umschlingungswandler verteilt wird, wobei durch geringfügig unterschiedliche Übersetzungssteuerungen abhängig beispielsweise von den Fahrsituationen das Antriebsmoment an der Vorderachse oder an der Hinterachse des Kraftfahrzeuges gezielt veränderbar ist. Die versetzte Positionierung der beiden Abtriebswellen der Abtriebsscheibensätze ergibt vorteilhaft eine weitgehende bauliche Freiheit bei der Anordnung des stufenlosen Getriebes.

Dabei kann auch vorteilhaft baulichen Gegebenheiten Rechnung getragen werden, weil weder die Antriebswelle zu den beiden Antriebsscheibensätzen, noch die Abtriebswellen der Abtriebsscheibensätze koaxial ausgerichtet sein müssen, sondern beispielsweise durch die Zwischenschaltung von Vorgelegen und/oder durch entsprechende unterschiedlich winkelige Anstellung der Umschlingungswandler und/oder durch unterschiedliche Kettenlängen (Achsabstände) der Umschlingungswandler deren Positionierung günstig anpassbar ist.

Zwischen den Umschlingungswandlern kann trieblich sowohl antriebsseitig als auch abtriebsseitig ein weiteres Vorgelege angeordnet sein, um bauliche Gegebenheiten besser berücksichtigen zu können und/oder Übersetzungsanpassungen vorzunehmen. Gegebenenfalls kann das Übersetzungsverhältnis der Vorgelege auch etwa 1 sein, wenn die dadurch auftretende Drehzahldifferenz zwischen den Umschlingungswandlern über deren Ansteuerung oder Übersetzungsauslegung ausgeglichen wird.

Gemäß dem Anspruch 1 ist in die Antriebswelle ein Differenzial eingeschaltet, dessen eines Abtriebselement mit dem ersten Antriebsscheibensatz und dessen anderes Abtriebselement mit dem zweiten Antriebsscheibensatz der beiden Umschlingungswandler trieblich verbunden ist. Damit können Verspannungen im Antriebstrang zwischen der Vorderachse und der Hinterachse des Kraftfahrzeuges zuverlässig vermieden werden und zugleich ebenfalls unterschiedliche Momentenverteilungen vorgegeben werden.

In baulich besonders gedrängter und robuster Auslegung kann das eine Abtriebselement des Differenziales über eine Hohlwelle mit dem ersten Antriebsscheibensatz und das andere Abtriebselement über eine zweite Welle durch die Hohlwelle hindurch mittelbar oder unmittelbar mit dem zweiten Antriebsscheibensatz verbunden sein.

Den Umschlingungswandlern kann vorteilhaft ein Wendesatz für einen Rückwärtsgang und/oder eine Anfahrkupplung und/oder ein Vorgelege vorgeschaltet sein, um die in Kraftfahrzeugen üblichen Kriterien bei Verwendung einer Brennkraftmaschine als Antriebsquelle zu verwirklichen.

Gemäß dem Anspruch 1 ist das Differenzial ein z. B. drehzahlabhängig gesteuertes Sperrdifferenzial (z. B. mit einer hydraulisch betätigten Lamellenkupplung) oder bevorzugt ein selbstsperrendes Differenzial, das nur eine definierte Differenzdrehzahl zwischen den beiden Abtrieben zur Vorderachse und Hinterachse zulässt und darüber hinaus einen starren Durchtrieb sicherstellt.

Gemäß dem Anspruch 1 ist die Selbstsperrung des Differenziales in an sich bekannter Weise durch eine Viskokupplung gebildet, die bei auftretenden Differenzdrehzahlen zwischen den Abtriebselementen selbsttätig aufgrund der Scherwirkung des Hydraulikfluids zwischen den Lamellen der Viskokupplung einen quasi starren Durchtrieb herstellt.
Alternativ kann das Differenzial auch ein Planetentrieb oder ein selbstsperrendes Torsendifferenzial mit gleichen oder unterschiedlich vorgegebenen Abtriebsmomenten sein, beispielsweise zur Erzielung unterschiedlicher Antriebsmomente an der Vorderachse und an der Hinterachse von 40:60 oder umgekehrt.

Gemäß dem Anspruch 9 ist anstelle eines mehr oder weniger permanenten Allradantriebes zwischen dem ersten Antriebsscheibensatz und dem zweiten Antriebsscheibensatz eine Kupplung vorgesehen, über die entweder gesteuert (hydraulisch betätigte Lamellenkupplung) oder bevorzugt selbstregelnd solange der Abtrieb auf eine Achse des Kraftfahrzeuges erfolgt, bis eine unzulässige Drehzahldifferenz auftritt. Dann schließt die Kupplung und schaltet dementsprechend die zweite Achse ebenfalls auf Antrieb.

Die Kupplung kann eine Viskokupplung wie vorstehend beschrieben oder bevorzugt eine sehr schnell ansprechende Haldexkupplung sein.

Die vorgeschlagene Verwendung zweier Umschlingungswandler bietet ferner die Möglichkeit, durch entsprechende separate Steuerung der stufenlosen Übersetzungen ebenfalls gezielte ggf. wechselnde Antriebsmomentenverteilungen vorzunehmen. Damit kann schnell und stufenlos beispielsweise das Fahrverhalten des Kraftfahrzeuges beim Beschleunigen in Kurven von Untersteuernd auf Neutral oder Übersteuernd geändert werden.

Mehrere Ausführungsbeispiele der Erfindung sind im Folgenden mit weiteren Einzelheiten näher beschrieben.

Die anliegende schematische Zeichnung zeigt in
- Fig. 1: ein aus dem Stand der Technik bekanntes stufenloses Getriebe für allradgetriebene Kraftfahrzeuge mit zwei Umschlingungswandlern, von denen der eine die Vorderachse und der andere die Hinterachse des Kraftfahrzeuges antreibt;
- Fig. 2: ein weiteres aus dem Stand der Technik bekanntes stufenloses Getriebe gemäß Fig. 1, jedoch mit nicht koaxialen Antriebswellen zu den Antriebsscheibensätzen der Umschlingungswandler;
- Fig. 3: ein weiteres stufenloses Getriebe gemäß Fig. 1 und 2, jedoch mit zusätzlich einem Differenzial und einer Viskokupplung in der Antriebswelle;
- Fig. 4: ein alternatives stufenloses Getriebe zu Fig. 3, mit einem Planetenraddifferenzial mit ungleicher Momentenverteilung und einer Viskokupplung; und
- Fig. 5: ein weiter modifiziertes stufenloses Getriebe zu Fig.1 mit einer in die Antriebswelle zu dem einen Antriebsscheibensatz eingeschalteten Haldexkupplung.

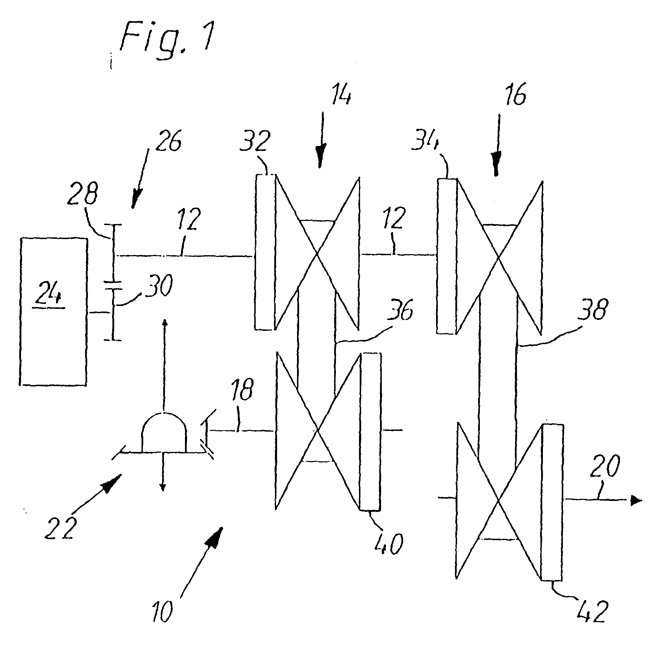

In der Fig. 1 ist mit 10 ein stufenloses Getriebe für allradgetriebene Kraftfahrzeuge dargestellt, das sich im wesentlichen aus einer Antriebswelle 12, zwei Umschlingungswandlern 14, 16 und zwei Abtriebswellen 18, 20, sowie einem integriertem Differenzial 22 für den Antrieb einer nicht dargestellten Vorderachse des Kraftfahrzeuges zusammensetzt.

Im Kraftfahrzeug ist das Getriebe 10, dessen Gehäuse und die Lagerungen der Wellen, etc. nicht dargestellt sind, an eine Brennkraftmaschine als Antriebsquelle angeschlossen, unter Zwischenschaltung eines Anfahrblockes 24 (nur schematisch angedeutet) mit einem Wendesatz zur Bereitstellung eines Rückwärtsganges, einer integrierten Anfahrkupplung und eines Stirnrad-Vorgeleges 26 mit den in Eingriff befindlichen Zahnrädern 28, 30.
Die Antriebswelle 12 treibt einen ersten Antriebsscheibensatz 32 und im starren Durchtrieb einen zweiten Antriebsscheibensatz 34 der beiden Umschlingungswandler 14, 16 an, die das Antriebsmoment über Ketten 36, 38 auf die Abtriebsscheibensätze 40, 42 mit dem eingestelltem Übersetzungsverhältnis übertragen.

Von dort wird das Antriebsmoment über die Abtriebswelle 18 auf das Vorderachsdifferenzial 22 bzw. auf die vorderen Räder des Kraftfahrzeuges übertragen. Das Differenzial 22 kann ein bekanntes Differenzial, z. B. ein Kegelraddifferenzial sein.

Über die Abtriebswelle 20 wird ferner das Abtriebsmoment z. B. über eine Kardanwelle und ein Hinterachsdifferenzial (nicht dargestellt) auf die Hinterräder des Kraftfahrzeuges geleitet.

Die Abtriebswelle 18 des ersten Umschlingungswandlers 14 ist zu der Abtriebswelle 20 des zweiten Umschlingungswandlers versetzt positioniert.

In der dargestellten Ausführung gemäß Fig. 1 liegt ein permanenter Allradantrieb des Kraftfahrzeuges vor, wobei Verspannungen im beschriebenen Antriebsstrang beispielsweise über einen gesteuerten Kettenschlupf der Umschlingungswandler oder gezielte geringfügig unterschiedliche stufenlose Übersetzungsverhältnisse regelungstechnisch ausgleichbar sind.

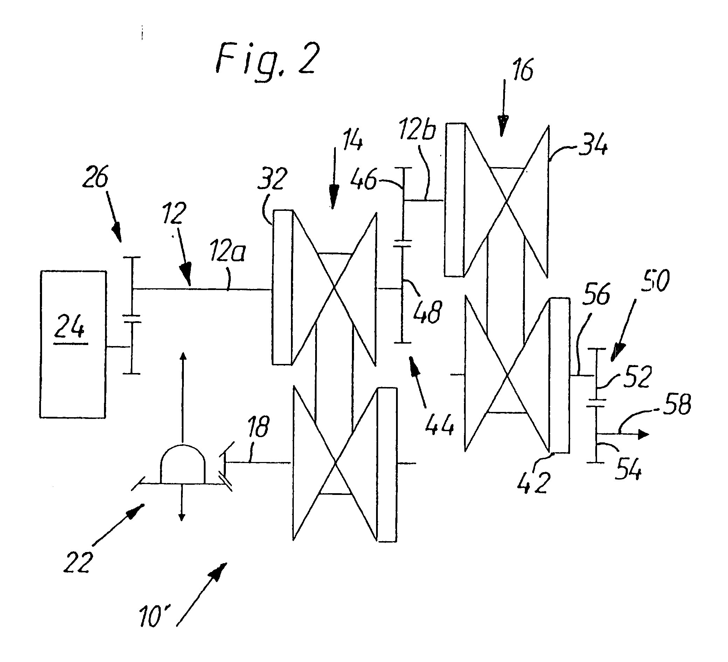

Zur Fig. 2 und den weiteren Figuren sind nur die Unterschiede zur Fig. 1 beschrieben. Gleiche Teile sind jeweils mit gleichen Bezugszeichen versehen.

Gemäß Fig. 2 ist bei dem dargestellten stufenlosen Getriebe 10' die Antriebswelle 12 in zwei Abschnitte 12a und 12b unterteilt und es ist im Antriebsfluss stromab des ersten Antriebsscheibensatzes 32 ein weiteres Stirnrad-Vorgelege 44 mit den Zahnrädern 46, 48 eingeschaltet. Dementsprechend sind wie ersichtlich die beiden Abschnitte 12a und 12b der Antriebswelle 12 nicht koaxial zueinander ausgerichtet.

Unter Zwischenschaltung eines weiteren Stirnrad-Vorgeleges 50 mit den Zahnrädern 52, 54 liegen auch die jetzt den Abtriebsscheibensatz 42 tragende Nebenwelle 56 und die Abtriebswelle 58 nicht koaxial zur anderen Abtriebswelle 18. Ferner können die beiden Umschlingungswandler 14, 16 in einer Draufsicht auf die Drehachsen der Wellen gesehen auch winkelig zueinander verschwenkt sein und gegebenenfalls auch unterschiedliche Kettenlängen bzw. Achsabstände der Scheibensätze aufweisen.

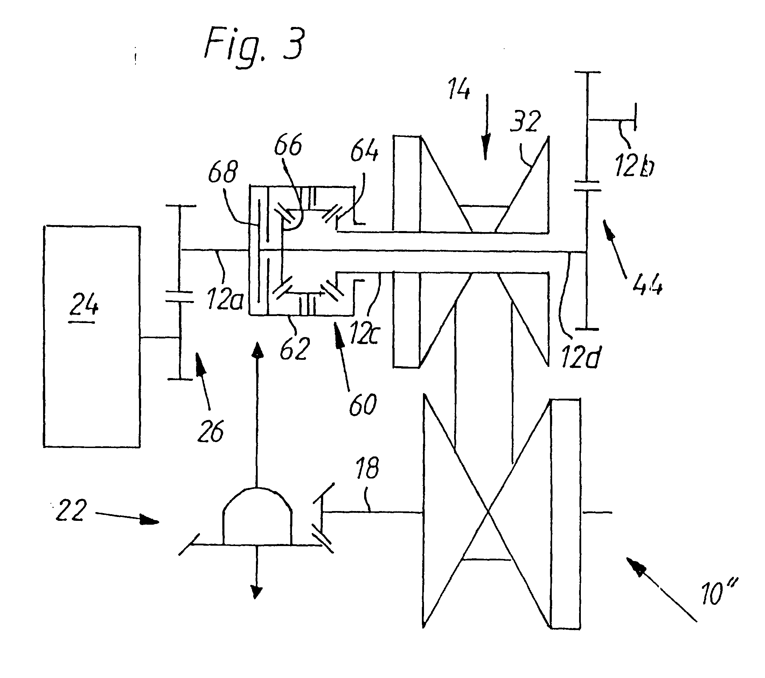

In der Fig. 3 sind den beiden Umschlingungswandlern 14, 16 (der Umschlingungswandler 16 und dessen weiterer Abtrieb ist nicht dargestellt und kann entsprechend der Fig. 1 oder 2 ausgeführt sein) des stufenlosen Getriebes 10" trieblich ein Kegelrad Differenzial 60 vorgeschaltet.

Dabei wirkt der Abschnitt 12a der Antriebswelle 12 auf das drehbar gelagerte Ausgleichsgehäuse 62 des Differenziales 60, während die beiden Abtriebselemente bzw. Abtriebskegelräder 64, 66 mit einer Hohlwelle 12c und einem durch die Hohlwelle 12c hindurch verlaufenden Wellenabschnitt 12d verbunden sind. Somit wirken die in bekannter Weise über entsprechende, im Ausgleichsgehäuse 62 drehbar gelagerte, Kegelräder trieblich miteinander verbundenen Abtriebskegelräder 64, 66 über die Hohlwelle 12c auf den ersten Antriebsscheibensatz 32 und über den Wellenabschnitt 12d und das Vorgelege 44 auf den zweiten Antriebsscheibensatz 34 (nicht dargestellt). Damit können Verspannungen bzw. Drehzahlunterschiede im Antriebsstrang entsprechend ausgeglichen werden.

Ferner ist in das Gehäuse 62 eine Viskokupplung 68 integriert (auch als Scherreibungskupplung bekannt), die in einer hochviskosen Flüssigkeit umlaufende Lamellen aufweist, die einerseits mit dem Gehäuse 62 und andererseits mit dem Abtriebselement bzw. Abtriebskegelrad 66 verbunden sind. Die Viskokupplung 68 sperrt bei einer definierten Drehzahldifferenz zwischen dem Gehäuse 62 und dem Abtriebskegelrad 66 aufgrund der Scherreibung der Flüssigkeit die Ausgleichswirkung des Differenziales 60 bzw. bewirkt einen quasi starren Durchtrieb auf die beiden Antriebsscheibensätze 32, 34 der Umschlingungswandler 14, 16.

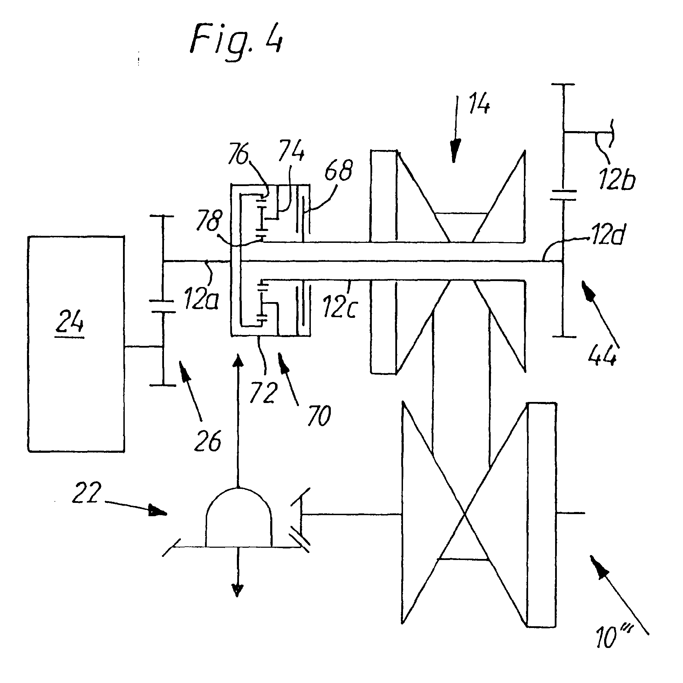

Abweichend zur Fig. 3 ist in der Fig. 4 bei dem Getriebe 10"' ein Planetenraddifferenzial 70 ebenfalls mit einer integrierten Viskokupplung 68 als Differenzialsperre verwendet.

Dabei treibt die Antriebswelle 12a wiederum ein Gehäuse 72 an, das mit dem Planetenradträger 74 trieblich verbunden ist. Die beiden Abtriebselemente bzw. das Sonnenrad 78 und das Außenrad 76 des Planetenradsatzes sind wie vorstehend mit der Hohlwelle 12c und dem durch die Hohlwelle 12c hindurch verlaufenden Wellenabschnitt 12d verbunden. Das Abtriebsmoment des Planetenraddifferenziales verläuft somit von den trieblich über die am Planetenradträger 74 drehbar gelagerten Planetenräder einerseits auf das Sonnenrad 78 und die Hohlwelle 12c zum Antriebsscheibensatz 32 und andererseits über das Außenrad 76 und den Wellenabschnitt 12d auf das Vorgelege 44 und dann auf den Antriebsscheibensatz 34 (nicht dargestellt, vgl. z. B. Fig. 2).

Ferner sind die Lamellen der Viskokupplung 68 mit dem Gehäuse 72 und der Hohlwelle 12c trieblich verbunden und bilden somit wie vorstehend beschrieben ebenfalls eine bei Drehzahldifferenzen aktive Differenzialsperre.

Durch geeignete Auslegung des Planetenradsatzes bzw. des Planetenraddifferenziales 70 kann eine unterschiedliche Antriebsmomentenverteilung zur Vorderachse und Hinterachse des Kraftfahrzeuges vorgegeben werden.

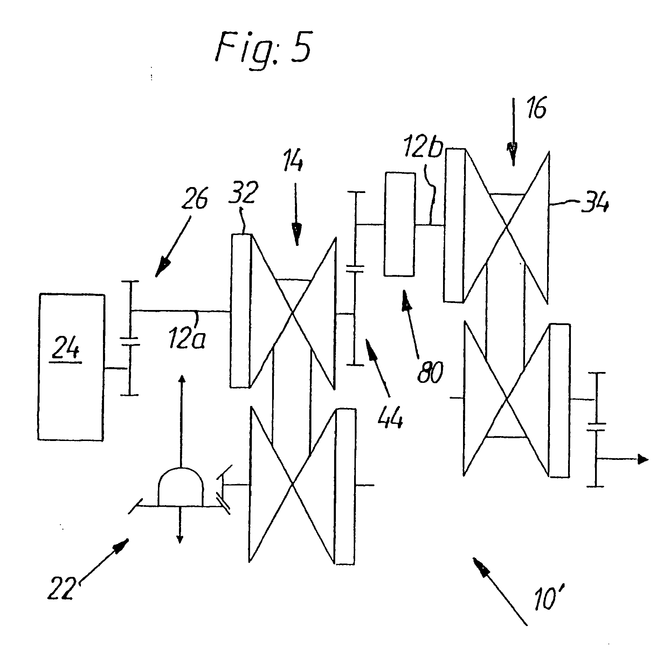

Gemäß Fig. 5 schließlich ist in Abwandlung zur Fig. 2 zwischen dem ersten Antriebsscheibensatz 32 und dem zweiten Antriebsscheibensatz 34 der Umschlingungswandler 14, 16 eine nur schematisch angedeutete Haldexkupplung 80 in die Antriebswelle 12b eingeschaltet. Die von der Funktion her bekannte Haldexkupplung 80 überträgt ein Antriebsmoment auf den zweiten Umschlingungswandler 16 nur dann, wenn aufgrund von durchdrehenden Rädern des Kraftfahrzeuges (im Ausführungsbeispiel der Hinterräder) oder durch Einregeln eine Drehzahldifferenz an der Haldexkupplung 80 auftritt.

Während die Ausführungsbeispiele nach den Fig. 1 bis 4 einen permanenten Allradantrieb mit oder ohne Zwischenachs-Differenzial und mit oder ohne Differenzialsperre beschreiben, ist gemäß Fig. 5 der Allradantrieb über die Haldexkupplung 80 zuschaltbar.

Die vorliegende Erfindung ist nicht auf die beschriebenen Ausführungsbeispiele beschränkt; vielmehr sind Abwandlungen zwischen den Ausführungen gemäß den Fig. 1 bis 5 im Rahmen der formulierten Ansprüche und unter Berücksichtigung baulicher und konstruktiver Vorgaben für den Fachmann geläufig.

## Patentansprüche

1. Stufenloses Getriebe für allradgetriebene Kraftfahrzeuge, mit einem Antriebsstrang (12) und zwei trieblich mit einer Vorderachse und einer Hinterachse des Kraftfahrzeuges verbundenen Abtriebswellen (18, 20), sowie mit einem stufenlosen Umschlingungswandler (14) mit einem Antriebsscheibensatz (32) und einem Abtriebsscheibensatz (40), wobei ein zweiter Umschlingungswandler (16) vorgesehen ist, so dass der eine Umschlingungswandler (14) abtriebsseitig auf die Vorderachse und der zweite Umschlingungswandler (16) auf die Hinterachse des Kraftfahrzeuges wirkt, wobei die beiden Antriebsscheibensätze (32, 34) der beiden Umschlingungswandler (14, 16) mittels des Antriebsstranges (12) angetrieben sind, und wobei die beiden mit je einer Abtriebswelle (18, 20) verbundenen Abtriebsscheibensätze (40, 42) versetzt zueinander positioniert sind sowie in den Antriebsstrang (12) ein Differenzial (60; 70) eingeschaltet ist, dessen eines Abtriebselement (64; 78) mit dem ersten Antriebsscheibensatz (32) und dessen anderes Abtriebselement (66; 76) mit dem zweiten Antriebsscheibensatz (34) der beiden Umschlingungswandler (14, 16) trieblich verbunden ist, **dadurch gekennzeichnet, dass** das in den Antriebsstrang (12) eingeschaltete Differenzial (60; 70) als Sperrdifferenzial ausgebildet ist, in das eine selbstsperrende Viskokupplung (68) integriert ist, und dass die Viskokupplung (68) mit einer definierten Differenzdrehzahl zur Erzielung einer definierten Abtriebsmomentenverteilung ausgelegt ist.

2. Getriebe nach Anspruch 1, **dadurch gekennzeichnet, dass** der Antriebsstrang (12) über wenigstens ein Vorgelege (44) unterteilt ist, so dass die beiden Antriebsscheibensätze (32, 34) der beiden Umschlingungswandler (14, 16), denen jeweils eine Antriebswelle (12a, 12b) des Antriebsstranges (12) zugeordnet ist, axial zueinander versetzt sind.

3. Getriebe nach Anspruch 2, **dadurch gekennzeichnet, dass** die Übersetzung des Vorgeleges (44) im Antriebsstrang (12) etwa 1 ist und dass im Wesentlichen gleiche Abtriebsdrehzahlen über die beiden Umschlingungswandler (14, 16) eingestellt sind.

4. Getriebe nach einem der Ansprüche 1 bis 3, **dadurch gekennzeichnet, dass** das eine Abtriebselement (64; 78) des Differenziales (60; 70) über eine Hohlwelle (12c) mit dem ersten Antriebsscheibensatz (32) und das andere Abtriebselement (66; 76) über einen zweiten Wellenabschnitt (12d) durch die Hohlwelle (12c) hindurch mittelbar oder unmittelbar mit dem zweiten Antriebsscheibensatz (34) verbunden ist.

5. Getriebe nach einem der Ansprüche 1 bis 4, **dadurch gekennzeichnet, dass** der Antriebsstrang (12) ein Wendesatz (24) für einen Rückwärtsgang und/oder eine Anfahrkupplung (24) und/oder ein Vorgelege (26) vorgeschaltet sind.

6. Getriebe nach einem der Ansprüche 1 bis 5, **dadurch gekennzeichnet, dass** der Abtrieb (58) zur Hinterachse des Kraftfahrzeuges über ein weiteres Vorgelege (50) erfolgt.

7. Getriebe nach einem der Ansprüche 1 bis 6, **dadurch gekennzeichnet, dass** ein Vorderachs-Differenzial (22) zum Antrieb der Vorderachse des Kraftfahrzeuges im Getriebe (10) integriert ist.

8. Getriebe nach einem der Ansprüche 1 bis 7, **dadurch gekennzeichnet, dass** das Differenzial ein Planetenrad-Differenzial (70) mit unterschiedlichem Abtriebsmoment zu den beiden Antriebsscheibensätzen (32, 34) ist.

9. Stufenloses Getriebe für allradgetriebene Kraftfahrzeuge, mit einem Antriebsstrang (12) und zwei trieblich mit einer Vorderachse und einer Hinterachse des Kraftfahrzeuges verbundenen Abtriebswellen (18, 20), sowie mit einem stufenlosen Umschlingungswandler (14) mit einem Antriebsscheibensatz (32) und einem Abtriebsscheibensatz (40), wobei ein zweiter Umschlingungswandler (16) vorgesehen ist, so dass der eine Umschlingungswandler (14) abtriebsseitig auf die Vorderachse und der zweite Umschlingungswandler (16) auf die Hinterachse des Kraftfahrzeuges wirkt, wobei die beiden Antriebsscheibensätze (32, 34) der beiden Umschlingungswandler (14, 16) mittels des Antriebsstranges (12) angetrieben sind, und wobei die beiden mit je einer Abtriebswelle (18, 20) verbundenen Abtriebsscheibensätze (40, 42) versetzt zueinander positioniert sind, **dadurch gekennzeichnet, dass** trieblich zwischen dem ersten Antriebsscheibensatz (32) und dem zweiten Antriebsscheibensatz (34) eine Kupplung (80) vorgesehen ist, die eine definierte Drehzahldifferenz zwischen dem ersten und dem zweiten Antriebsscheibensatz (32, 34) zulässt.

10. Getriebe nach Anspruch 9, **dadurch gekennzeichnet, dass** die Kupplung (80) eine Haldex-Kupplung ist.

11. Getriebe nach einem der Ansprüche 1 bis 10, **dadurch gekennzeichnet, dass** die beiden Umschlingungswandler (14, 16) zur Erzielung einer unterschiedlichen Abtriebsmomentenverteilung mit geringfügig unterschiedlichen Übersetzungen gesteuert werden.

## Claims

1. Continuously variable transmission for all wheel drive motor vehicles with a driving train (12) and two output shafts (18, 20), connected driving to a front axle and a rear axle of the motor vehicle, and with a variable contact converter (14) with a driving disc set (32) and an output disc set (40), in which a second contact converter (16) is provided so that one contact converter (14) works on the output side on the front axle and the second contact converter (16) works on the rear axle of the motor vehicle, in which both driving disc sets (32, 34) of both contact converters (14, 16) are driven by means of the driving train (12) and in which both output disc sets (40, 42), each connected to an output shaft (18, 20), are positioned offset to each other and a differential (60; 70) is connected in the driving train (12), one output element (64; 78) of which is connected driving with the first driving disc set (32) and the other output element (66; 76) of which is connected driving with the second driving disc set (34) of both contact converters (14, 16), **characterised in that** the differential (60; 70) connected in the driving train (12) is made as a locking differential, into which a self locking viscocoupling (68) is integrated, and that this viscocoupling (68) is designed with a defined difference in speed to obtain a defined output moment distribution.

2. Transmission according to claim 1, **characterised in that** the driving train (12) is sub-divided by at least one gear (44) so that both driving disc sets (32, 34) of both contact converters (14, 16), to each of which a drive shaft (12a, 12b) of the driving train (12) is allocated, are offset axially to each other.

3. Transmission according to claim 2, **characterised in that** the transmission ratio of the gear (44) in the driving train (12) is about 1 and that basically the same output speeds are set through both contact converters (14, 16).

4. Transmission according to one of claims 1 to 3, **characterised in that** one output element (64; 78) of the differential (60; 70) is connected to the first driving disc set (32) through a hollow shaft (12c) and the other output element (66; 76) is connected directly or indirectly to the second driving disc set (34) through a second shaft section (12d) through the hollow shaft (12c).

5. Transmission according to one of claims 1 to 4, **characterised in that** a turning set (24) for a reverse gear and/or a starting coupling (24) and/or a gear (26) are upstream of the driving train (12).

6. Transmission according to one of claims 1 to 5, **characterised in that** the output (58) to the rear axle of the motor vehicle is effected through another gear (50).

7. Transmission according to one of claims 1 to 6, **characterised in that** a front axle differential (22) to drive the front axle of the motor vehicle is integrated into the transmission (10).

8. Transmission according to one of claims 1 to 7, **characterised in that** the differential is a planetary gear differential (70) with a different output moment to the two driving disc sets (32, 34).

9. Continuously variable transmission for all wheel drive motor vehicles with a driving train (12) and two output shafts (18, 20), connected driving to a front axle and a rear axle of the motor vehicle, and with a variable contact converter (14) with a driving disc set (32) and an output disc set (40), in which a second contact converter (16) is provided so that one contact converter (14) works on the output side on the front axle and the second contact converter (16) works on the rear axle of the motor vehicle, in which both driving disc sets (32, 34) of both contact converters (14, 16) are driven by means of the driving train (12) and in which both output disc sets (40, 42), each connected to an output shaft (18, 20), are positioned offset to each other, **characterised in that** a coupling (80) is provided driving between the first driving disc set (32) and the second driving disc set (34), which allows a defined difference in speed between the first and the second driving disc set (32, 34).

10. Transmission according to claim 9, **characterised in that** the coupling (80) is a Haldex coupling.

11. Transmission according to one of claims 1 to 10, **characterised in that** both contact converters (14, 16) are controlled to obtain a different output moment distribution with small differences in transmission ratios.

## Revendications

1. Transmission à variation continue pour des véhicules automobiles à transmission intégrale, avec une chaîne d'entraînement (12) et deux arbres de sortie (18, 20) reliés par entraînement à un essieu avant et à un essieu arrière du véhicule automobile, ainsi qu'avec un convertisseur d'enroulement en continu (14) avec un jeu de disques d'entraînement (32) et un jeu de disques de sortie (40), un second convertisseur d'enroulement (16) étant prévu, de sorte que l'un des convertisseurs d'enroulement (14) agit du côté de la sortie sur l'essieu avant et le second convertisseur d'enroulement (16) sur l'essieu arrière du véhicule, à l'occasion de quoi les deux jeux de disques d'entraînement (32, 34) des deux convertisseurs d'enroulement (14, 16) sont entraînés au moyen de la chaîne d'entraînement (12), et à l'occasion de quoi les deux jeux de disques de sortie (40, 42) reliés respectivement à un arbre de sortie (18, 20) sont positionnés en étant décalés l'un par rapport à l'autre et un différentiel (60 ; 70) est inséré dans la chaîne d'entraînement (12), différentiel dont l'un des éléments de sortie (64 ; 78) est relié par entraînement au premier jeu de disques d'entraînement (32) et l'autre élément de sortie (66 ; 76) au second jeu de disques d'entraînement (34) des deux convertisseurs d'enroulement (14, 16), **caractérisée en ce que** le différentiel (60 ; 70) inséré dans la chaîne d'entraînement (12) est réalisé sous la forme d'un différentiel de blocage, dans lequel un visco-coupleur (68) autobloquant est intégré, et **en ce que** le visco-coupleur (68) est conçu avec un nombre de tours différentiel défini pour l'obtention d'une répartition définie des couples de sortie.

2. Transmission conformément à la revendication 1, **caractérisée en ce que** la chaîne d'entraînement (12) est répartie sur au moins une transmission intermédiaire (44), de sorte que les deux jeux de disques d'entraînement (32, 34) des deux convertisseurs d'enroulement (14, 16), auxquels il est respectivement affecté un arbre d'entraînement (12a, 12b) de la chaîne d'entraînement (12), sont décalés axialement l'un par rapport à l'autre.

3. Transmission conformément à la revendication 2, **caractérisée en ce que** la démultiplication de la transmission intermédiaire (44) dans la chaîne d'entraînement (12) est à peu près de 1 et que les nombres de tours de sortie sont réglés principalement les mêmes sur les deux convertisseurs d'enroulement (14, 16).

4. Transmission conformément à l'une des revendications 1 à 3, **caractérisée en ce qu'**un élément de sortie (64 ; 78) du différentiel (60 ; 70) est relié via un arbre creux (12c) au premier jeu de disques d'entraînement (32) et, **en ce que** l'autre élément de sortie (66 ; 76), au travers de l'arbre creux (12), est relié directement ou indirectement au second jeu de disques d'entraînement (34), sur une portion d'arbre seconde.

5. Transmission conformément à l'une des revendications 1 à 4, **caractérisée en ce qu'**un jeu de réversion (24) pour une marche arrière et / ou un embrayage de démarrage (24) et / ou une transmission intermédiaire (26) est monté en amont de la chaîne d'entraînement (12).

6. Transmission conformément à l'une des revendications 1 à 5, **caractérisée en ce que** la sortie (58) par rapport à l'essieu arrière du véhicule automobile est effectuée par l'intermédiaire d'une autre transmission intermédiaire (50).

7. Transmission conformément à l'une des revendications 1 à 6, **caractérisée en ce qu'**un différentiel de l'essieu avant (22) est intégré pour l'entraînement de l'essieu avant du véhicule automobile dans la transmission (10).

8. Transmission conformément à l'une des revendications 1 à 7, **caractérisée en ce que** le différentiel est un différentiel à roue planétaire (70) avec un couple de sortie différent par rapport aux deux jeux de disques d'entraînement (32 ; 34).

9. Transmission à variation continue pour des véhicules automobiles à transmission intégrale, avec une chaîne d'entraînement (12) et deux arbres de sortie (18, 20) reliés par entraînement à un essieu avant et à un essieu arrière du véhicule automobile, ainsi qu'avec un convertisseur d'enroulement en continu (14) avec un jeu de disques d'entraînement (32) et un jeu de disques de sortie (40), un second convertisseur d'enroulement (16) étant prévu, de sorte que l'un des convertisseurs d'enroulement (14) agit du côté de la sortie sur l'essieu avant et le second convertisseur d'enroulement (16) sur l'essieu arrière du véhicule, à l'occasion de quoi les deux jeux de disques d'entraînement (32, 34) des deux convertisseurs d'enroulement (14, 16) sont entraînés au moyen de la chaîne d'entraînement (12), et à l'occasion de quoi les deux jeux de disques de sortie (40, 42) reliés respectivement à un arbre de sortie (18, 20) sont positionnés en étant décalés l'un par rapport à l'autre, **caractérisée en ce qu'**il est prévu un coupleur (80) entraîné entre le premier jeu de disques d'entraînement (32) et le second jeu de disques d'entraînement (34) et qui permet une différence de régime définie entre le premier et le second jeu de disques d'entraînement (32, 34).

10. Transmission conformément à la revendication 9, **caractérisée en ce que** le coupleur (80) est un coupleur Haldex.

11. Transmission conformément à l'une des revendications 1 à 10, **caractérisée en ce que** les deux convertisseurs d'enroulement (14, 16) sont commandés pour l'obtention d'une répartition différente des couples de sortie avec des rapports de transmission de faible différence.
